# EUROPÄISCHE PATENTANMELDUNG

(11) **EP 1 179 656 A1**
(43) Veröffentlichungstag der Anmeldung: **13.02.2002**
(21) Anmeldenummer: 00117176.8
(22) Anmeldetag: 10.08.2000
(51) Int. Cl.: F01K 7/16, G01N 25/60

(54) **Verfahren zum Betreiben einer Dampfturbinenanlage und Dampfturbinenanlage**

(71) Anmelder: SIEMENS AKTIENGESELLSCHAFT, 80333 München (DE)
(72) Erfinder: Girbig, Paul, 91080 Uttenreuth (DE); Junk, Rainer, Dr., 91091 Grossenseebach (DE)

(57) **Zusammenfassung**

Um einen sicheren Betrieb der Dampfturbinenanlage (2) mit zugleich hohem Wirkungsgrad zu ermöglichen, wird während des Betriebs der Dampfturbinenanlage (2) Nässe im Dampf (HD,D) durch ein optisches Messverfahren erfasst und in Abhängigkeit des Messergebnisses wird die Dampfturbinenanlage (2) gesteuert. Das optische Messverfahren ermöglicht eine sehr schnelle und genaue Ermittlung, ob sich in dem Dampf (HD,D) Wassertröpfchen befinden.

## Beschreibung

Verfahren zum Betreiben einer Dampfturbinenanlage und Dampfturbinenanlage

Die Erfindung betrifft ein Verfahren zum Betreiben einer Dampfturbinenanlage sowie eine Dampfturbinenanlage.

Eine Dampfturbinenanlage weist eine Dampfturbine auf, der über eine Dampfleitung Dampf zugeführt wird, welcher zuvor in der Regel in einem Dampferzeuger erzeugt wird. Der Dampf treibt die Dampfturbine an, welche die im Dampf enthaltene thermische Energie in mechanische Bewegung umsetzt. Auf dem Gebiet der Energieerzeugung wird mit Hilfe der Dampfturbine über eine Welle ein Generator zur Erzeugung von elektrischer Energie angetrieben.

Eine für eine hohe Leistung ausgelegte Dampfturbine wird in der Regel mit sogenanntem Heißdampf, auch als überhitzter Dampf bezeichnet, betrieben. Heißdampf wird dabei erhalten durch Temperaturerhöhung eines Sattdampfes, wobei Sattdampf den thermodynamischen Zustand im Phasendiagramm entlang der Phasenlinie zwischen Flüssigkeit und Gas (Dampf) definiert. Unter Dampf im technischen Sinne wird also der reine gasförmige Dampf ohne Wasser- oder Nässeanteil verstanden. Die Dampfturbine wird mit Heißdampf betrieben einerseits, um einen möglichst hohen Wirkungsgrad zu erreichen, und andererseits um die Gefahr von Tröpfchenbildung, also die Gefahr von Nässe, im Dampf möglichst gering zu halten. Die Vermeidung von Nässe im Dampf ist dabei eine wesentliche Voraussetzung für einen schadensfreien Betrieb der Dampfturbine. Andernfalls werden bei Auftreten von Wassertropfen im Dampf diese aufgrund der sehr hohen Umfangsgeschwindigkeiten der Dampfturbinenblätter stark beschleunigt, so dass sie bei Auftreten auf mechanischen Bauteilen der Dampfturbine zu deren Beschädigung führen können. Zusätzlich besteht bei Auftreffen von Wassertröpfchen das Problem der thermischen Materialbeanspruchung aufgrund von zumindest lokal drastischen Temperaturabsenkungen.

Um zu vermeiden, dass sich Wassertropfen im Dampf bilden, besteht die Möglichkeit der Temperaturkontrolle des Dampfs. Aus der gemessenen Temperatur können dann Rückschlüsse auf die Gefahr der Ausbildung von Wassertropfen geschlossen werden. Die Temperaturkontrolle hat allerdings den Nachteil, dass sie zum einen lediglich eine indirekte Messung darstellt, die keine Aussage über das tatsächliche Auftreten von Wassertropfen liefert, so dass eine ausreichend große Sicherheitsmarge eingehalten werden muss. Zum anderen ist die Temperaturmessung träge, zumindest in dem Sinn, dass eine lokal auftretende niedrige Temperatur, die zur Auskondensation von Wassertröpfchen führt, nicht sofort erfasst wird.

Die notwendige Sicherheitsmarge hat darüber hinaus den Nachteil, dass die thermische Energie des Dampfs nicht optimal genutzt wird. Denn der Dampf weist beim Austritt aus der Dampfturbine in der Regel noch eine vergleichsweise hohe Temperatur auf, was sich negativ auf den Wirkungsgrad der Dampfturbinen auswirkt.

Der Erfindung liegt die Aufgabe zugrunde, ein Verfahren zum Betreiben einer Dampfturbinenanlage sowie eine Dampfturbinenanlage anzugeben, bei denen ein sicherer und wirtschaftlicher Betrieb gewährleistet ist.

Die Aufgabe wird gemäß der Erfindung gelöst, indem bei dem Verfahren zum Betreiben einer eine Dampfturbine umfassenden Dampfturbinenanlage während deren Betriebs Nässe im Dampf durch ein optisches Messverfahren erfasst und in Abhängigkeit des Messergebnisses die Dampfturbinenanlage gesteuert wird.

Damit wird der entscheidende Vorteil erzielt, dass das Auftreten von Nässe direkt gemessen wird. Eine derartige direkte optische Messung ist sehr schnell und erlaubt Reaktionszeiten bei Auftreten von Nässe, die < 0,5 sec. sind. Zudem ist mit dem optischen Messverfahren auch die Genauigkeit im Vergleich zu der indirekten Messung mittels Temperaturmessung deutlich erhöht. Mit der optischen Messung ist es nämlich möglich, eine Aussage zu treffen, ob Wassertröpfchen vorhanden sind oder nicht.

Vorzugsweise wird hierbei Licht in den Dampf insbesondere gebündelt eingestrahlt und die Reflexion und/oder Transmission ausgewertet. Unter Licht werden hierbei die elektromagnetischen Wellenlängenbereiche verstanden, die für die Auswertung der Reflexion/Transmission bei Dampf geeignet sind. Der Begriff Licht ist hierbei also nicht zwingend auf das sichtbare Wellenlängenspektrum begrenzt. Als Lichtquelle wird vorzugsweise ein Laser verwendet, und das reflektierte/transmittierte Licht wird vorzugsweise von einem als Fotozelle ausgestalteten lichtsensitiven Element erfasst.

Um eine möglichst genaue Messung zu ermöglichen, wird die Messung bevorzugt unmittelbar an einer Dampfleitung durchgeführt, die der Dampfturbine den Dampf zuführt. Die Dampfleitung weist hierzu ein für das von der Lichtquelle abgegebene Licht transparentes Fenster auf.

In einer zweckdienlichen Ausbildung wird der Dampf vor Eintritt in die Dampfturbine auf Nässe untersucht, um bei Auftreten von Nässe im Dampf geeignete Gegenmaßnahmen zu ergreifen und eine Schädigung der Dampfturbine durch sogenannten Wasserschlag zu verhindern.

Vorzugsweise wird hierbei bei Auftreten von Nässe im der Turbine zugeführten Dampf die Nässe durch Temperatur- und/oder Druckänderung des Dampfes reduziert und insbesondere vollständig vermieden. Bei einer Hochleistungsdampfturbine wird generell die vollständige Nässefreiheit des Heißdampfes angestrebt. Zur Einstellung des Dampfzustandes stehen hierbei mehrere Möglichkeiten zur Verfügung. In der Regel wird der der Dampfturbine zugeführte Dampf zusammengemischt aus dem in einem Dampferzeuger erhitzten Heißdampf und einem kälteren Kaltdampf. Die einfachste Möglichkeit auf den Dampfzustand Einfluss zu nehmen, besteht daher darin, dieses Mischungsverhältnis zu variieren. Zudem bietet dies die Möglichkeit einer sehr raschen Änderung.

Gemäß einer weiteren bevorzugten Ausführung wird zusätzlich zu der Überwachung des Dampfes auf Nässe vor seinem Eintritt in die Dampfturbine der Dampf auch nach Austritt aus der Dampfturbine auf Nässe untersucht. Dadurch besteht die Möglichkeit festzustellen, ob der Dampf über seinen gesamten Strömungsweg in der Dampfturbine auch tatsächlich nässefrei bleibt, um in der gesamten Dampfturbine eine Schädigung durch Wasserschlag zu vermeiden. Zudem besteht die Möglichkeit, anhand der am Austritt erhaltenen Messergebnisse die Dampfturbine mit einem möglichst hohen Wirkungsgrad zu fahren. Denn aufgrund der direkten Messung, die eine Aussage erlaubt, ob Nässe vorliegt oder nicht, entfällt die Notwendigkeit einer vergleichsweise hohen Sicherheitsmarge, wie es bei einer Temperaturkontrolle erforderlich wäre.

Vorzugsweise werden die Betriebsparameter der Dampfturbinenanlage daher derart gewählt, dass der Dampf die Dampfturbine im Wesentlichen als Sattdampf verlässt. Unmittelbar nach Austritt aus der Dampfturbine kondensieren also aus dem Dampf Wassertröpfchen aus. Gleichzeitig ist gewährleistet, dass innerhalb der Dampfturbine noch keine Wassertropfen entstanden sind, die die Dampfturbine schädigen könnten. "Im Wesentlichen als Sattdampf" bedeutet hierbei, dass eine gewisse Menge an Nässe im Endbereich der Dampfturbine unter Umständen tolerierbar ist. Um eine Schädigung zu vermeiden ist es von Vorteil, die Fähigkeit des optischen Messverfahrens dahingehend auszuschöpfen, dass neben dem Anteil der Wassertröpfchen im Dampf auch deren Größe erfasst wird. Denn die Größe, also die Masse, bestimmt maßgeblich die Schädigungsgefahr.

Die Aufgabe wird gemäß der Erfindung weiterhin gelöst durch eine Dampfturbinenanlage mit einer Steuereinrichtung und mit einer Dampfturbine, der ein Dampf über eine Dampfleitung zu-und abgeführt wird, wobei eine optische Messeinrichtung zur Erfassung von Nässe im Dampf während des Betriebs vorgesehen ist, von der die ermittelten Messdaten an die Steuereinrichtung übermittelbar sind.

Die im Hinblick auf das Verfahren aufgeführten Vorteile und zweckdienlichen Ausgestaltungen sind sinngemäß auf die Dampfturbinenanlage zu übertragen. Bevorzugte Ausführungsformen der Dampfturbinenanlage sind den Unteransprüchen zu entnehmen.

Ein Ausführungsbeispiel der Erfindung wird im Folgenden anhand der Zeichnung näher erläutert. Es zeigen jeweils in schematischen, stark vereinfachten Darstellungen:
- FIG 1: eine Dampfturbinenanlage, und
- FIG 2: eine ausschnittsweise Darstellung einer Dampfleitung mit einer optischen Messeinrichtung.

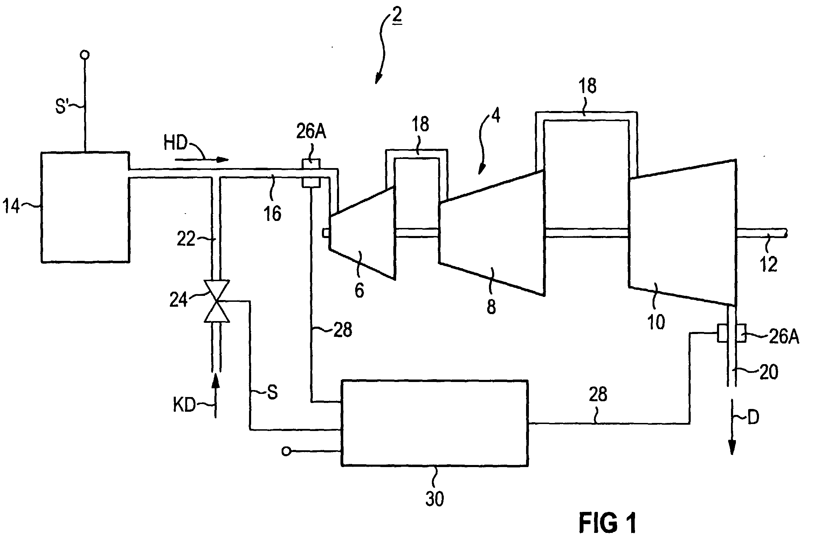

Gemäß FIG 1 umfasst eine Dampfturbinenanlage 2 eine Dampfturbine 4, die sich zusammensetzt aus einem Hochdruckteil 6, einem Mitteldruckteil 8 und einem Niederdruckteil 10, die jeweils als eigenständige Baueinheiten ausgeführt sind. Die einzelnen Teile der Dampfturbine sind über eine gemeinsame Welle 12 miteinander verbunden. Die Welle 12 dient beispielsweise in einem Kraftwerk zur Energieerzeugung zum Antreiben eines elektrischen Generators.

Die Dampfturbinenanlage 2 umfasst weiterhin einen Dampferzeuger 14, in dem Heißdampf HD erzeugt wird, welcher über eine Dampfzuleitung 16 dem Hochdruckteil 6 zugeführt wird. Der zugeführte Heißdampf HD hat beispielsweise eine Temperatur von etwa 600° und weist einen Druck von etwa 170 bar auf. Der Heißdampf HD durchströmt zunächst den Hochdruckteil 6, wird anschließend über eine Verbindungsleitung 18 dem Mitteldruckteil 8 und nach dessen Durchströmen dem Niederdruckteil 10 ebenfalls über eine Verbindungsleitung 18 zugeführt. Am Ende des Niederdruckteils 10 verlässt der Dampf über eine Dampfableitung 20 die Dampfturbine 4 als entspannter und abgekühlter Dampf D.

In die Dampfzuleitung 16 mündet eine Mischleitung 22, in der ein Ventil 24 angeordnet ist und über die dem Heißdampf ein kälterer Dampf KD zugeführt werden kann, um einen gewünschten und gleichmäßigen Dampfzustand des der Dampfturbine 4 zugeführten Heißdampfes HD zu gewährleisten.

Im Ausführungsbeispiel gemäß FIG 1 sind unmittelbar vor dem Hochdruckteil 6 sowie unmittelbar im Anschluss an das Niederdruckteil 10 an der Dampfzuleitung 16 bzw. an der Dampfableitung 20 jeweils eine optische Messeinrichtung 26A,B vorgesehen, die über Datenleitungen 28 mit einer Steuereinrichtung 30 für die Dampfturbinenanlage 2 in Verbindung stehen.

Beim Betrieb der Dampfturbinenanlage 2 wird insbesondere sowohl der zugeführte Heißdampf HD als auch der abgeführte und entspannte Dampf D auf Auftreten von Nässe, also auf Vorhandensein von Wassertropfen, mit Hilfe der Messeinrichtungen 26A,B überwacht. Diese geben bei Auftreten von Nässe ein entsprechendes Signal über die Datenleitung 28 an die Steuereinrichtung 30 weiter. Wird von dem in der Dampfzuleitung 16 angeordneten Messeinrichtung 26A Nässe erfasst, so besteht die unmittelbare Gefahr von Wasserschlag im Hochdruckteil 6. Die Steuereinrichtung 30 wirkt dann insbesondere automatisch auf den Betrieb der Dampfturbinenanlage 2 dahingehend ein, dass gewährleistet ist, dass der dem Hochdruckteil 6 zugeführte Heißdampf HD nässefrei ist. Insbesondere gibt die Steuereinrichtung 30 hierzu ein Steuersignal S an das Ventil 24 ab, um die Beimischung von kaltem Dampf KD zu verringern. Zudem oder alternativ kann die Steuereinrichtung 30 auch ein weiteres Signal S' an den Dampferzeuger 14 abgeben, um eine Erhöhung der Temperatur oder eine Erniedrigung des Drucks des Heißdampfes HD herbeizuführen.

In vergleichbarer Weise wird verfahren, wenn von der Messeinrichtung 26B an der Dampfableitung 20 Nässe erfasst wird. Auch hier besteht bei Auftreten von Nässe die Gefahr, dass das Niederdruckteil 10 Schaden nimmt. Um die Kontrollmöglichkeit zu verbessern, können in den Verbindungsleitungen 18 weitere Messeinrichtungen 26 vorgesehen sein.

Mit Hilfe der Messeinrichtung 26B an der Dampfabteilung 20 besteht darüber hinaus die Möglichkeit, den Wirkungsgrad der Dampfturbine 4 zu erhöhen, indem in Abhängigkeit der Messergebnisse dieser Messeinrichtung 26B die Betriebsparameter der Dampfturbinenanlage 2 derart gewählt werden, dass der aus der Dampfturbine 4 austretende Dampf D im Wesentlichen als Sattdampf vorliegt. Der austretende Dampf ist also - eventuell bis auf einen geringfügigen unkritischen Nässeanteil - nässefrei. Damit wird eine möglichst vollständige Entspannung des Dampfes erreicht, ohne dass die Gefahr von Schäden durch Wasserschlag in der Dampfturbine 4 besteht. Für eine möglichst dampfes HD wird das Niederdruckteil 10 in der Regel mit Unterdruck betrieben. Dieser Unterdruck kann nunmehr im Hinblick auf einen möglichst hohen Wirkungsgrad präzise eingestellt werden.

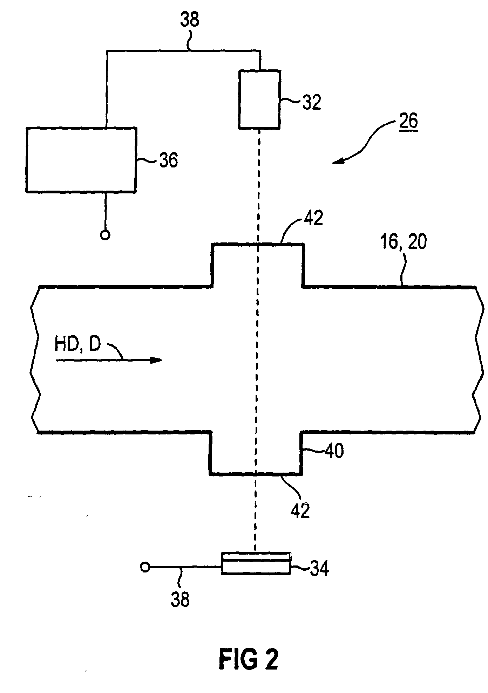

Zur Durchführung des optischen Messverfahrens weist die optische Messeinrichtung 26 gemäß FIG 2 eine Lichtquelle 32, beispielsweise einen Laser, ein lichtsensitives Element 34, beispielsweise eine Fotodiode, sowie eine Auswerteeinheit 36 auf. Die Lichtquelle 32 und das lichtsensitive Element 34 sind mit der Auswerteeinheit 36 über Leitungen 38 verbunden. Das von der Lichtquelle 32 emittierte Licht wird direkt in dem in der Dampfzuleitung 16 oder in der Dampfableitung 20 geführten Heißdampf HD bzw. Dampf D eingestrahlt und das transmittierte Licht wird von dem lichtsensitiven Element 34 erfasst. Um dies zu ermöglichen, weisen die Dampfleitungen 16,20 einen Messstutzen 40 mit einem für das Licht transparenten Fenster 42 auf. Das Fenster 42 ist dabei möglichst klein gewählt, um keine Gefahr für eine Leckage in der Dampfleitung 16,20 darzustellen.

Anstelle der gemäß FIG 2 dargestellten Transmission als Messprinzip kann alternativ auch die Reflexion gemessen werden. Hierzu ist das lichtsensitive Element 34 zumindest geringfügig neben der Lichtquelle 32 angeordnet.

Technischer, also gasförmiger und nässefreier Dampf, weist im Allgemeinen eine geringe Reflexion und damit eine hohe Transmission auf. Der Reflexionsgrad des Dampfes ist von seinem thermodynamischen Zustand abhängig. Bei Auftreten von Wassertröpfchen im Dampf erhöht sich die Reflexion. Anhand der Reflexionsrate kann dann auf den Anteil der Nässe geschlossen werden. Zudem sind auch Aussagen über die Größe der Wassertröpfchen möglich.

Mit diesem optischen Messverfahren ist eine direkte, sehr schnelle und genaue Möglichkeit zur Erfassung von Nässe im Heißdampf HD / Dampf D gegeben. Durch geeignete Steuerung der Dampfturbinenanlage 2 in Abhängigkeit der Messergebnisse besteht die Möglichkeit, Schäden an der Dampfturbinenanlage zu verhindern und gleichzeitig einen möglichst hohen Wirkungsgrad zu erzielen. Die Schäden können dabei sowohl hervorgerufen werden durch Wasserschlag, also dem mechanischen Auftreffen von Wassertröpfchen auf Bauteile der Dampfturbine, als auch durch thermische Materialbeanspruchung aufgrund von zumindest lokal drastischen Temperaturabsenkungen aufgrund des Vorhandenseins von Wassertröpfchen.

## Patentansprüche

1. Verfahren zum Betreiben einer eine Dampfturbine (4) umfas-senden Dampfturbinenanlage (2), bei dem während des Betriebs Nässe im Dampf (HD,D) durch ein optisches Messverfahren erfasst wird und in Abhängigkeit des Messergebnisses die Dampfturbinenanlage (2) gesteuert wird.

2. Verfahren nach Anspruch 1, bei dem Licht in den Dampf (HD,D) eingestrahlt und die Reflexion und/oder Transmission ausgewertet wird.

3. Verfahren nach Anspruch 1 oder 2, bei dem der Dampf (HD,D) in einer Dampfleitung (16,20) geführt wird, die ein Fenster (42) für das optische Messverfahren aufweist.

4. Verfahren nach einem der vorhergehenden Ansprüche, bei dem der Dampf (HD,D) vor Eintritt in die Dampfturbine (4) auf Nässe untersucht wird.

5. Verfahren nach Anspruch 4, bei dem die Nässe durch Temperatur- und/oder Druckänderung des Dampfes (HD) reduziert und insbesondere vollständig vermieden wird

6. Verfahren nach einem der vorhergehenden Ansprüche, bei dem der Dampf (D) nach Austritt aus der Dampfturbine(4) auf Nässe untersucht wird.

7. Verfahren nach Anspruch 6, bei dem die Betriebsparameter der Dampfturbinenanlage (2) derart gewählt werden, dass der Dampf (D) die Dampfturbine (4) im Wesentlichen als Sattdampf verlässt.

8. Dampfturbinenanlage (2) mit einer Steuereinrichtung (30) und mit einer Dampfturbine (4), der Dampf (HD,D) über eine Dampfleitung (16,20) zu- und abführbar ist, wobei eine optische Messeinrichtung (26) zur Erfassung von Nässe im Dampf (HD,D) während des Betriebs vorgesehen ist, von der die ermittelten Messdaten an die Steuereinrichtung (30) übermittelbar sind.

9. Dampfturbinenanlage (2) nach Anspruch 8, bei der die optische Messeinrichtung (26) eine Lichtquelle (32) zum Einstrahlen von Licht in den Dampf (HD,D), ein lichtsensitives Element (34) zum Erfassen des reflektierten oder des transmittierten Lichts sowie eine Auswerteeinheit (36) aufweist, mit der in Abhängigkeit des Anteils an reflektierten bzw. transmittierten Lichts die Menge an Nässe ermittelbar ist.

10. Dampfturbinenanlage (2) nach Anspruch 8 oder 9, bei der die Dampfleitung (16,20) ein Fenster (42) für die optische Messeinrichtung (26) aufweist.

11. Dampfturbinenanlage (2) nach einem der Ansprüche 8 bis 10, bei der die optische Messeinrichtung (26) in Strömungsrichtung des Dampfes vor und/oder nach der Dampfturbine (4) angeordnet ist.
